# EUROPÄISCHE PATENTSCHRIFT

(11) **EP 3 794 308 B1**
(45) Veröffentlichungstag und Bekanntmachung des Hinweises auf die Patenterteilung: **16.02.2022**
(21) Anmeldenummer: 19724082.3
(22) Anmeldetag: 18.04.2019
(51) Int. Cl.: G01B 11/04, G01B 11/10, G01B 11/24, G01B 11/27, B22D 11/20

(54) **VORRICHTUNG ZUR ERMITTLUNG EINER AUSRICHTUNG VON WENIGSTENS EINEM OBJEKT UND VERFAHREN ZUM RELATIVEN AUSRICHTEN VON ROLLEN**
APPARATUS FOR DETERMINING THE ORIENTATION OF AT LEAST ONE OBJECT AND METHOD FOR RELATIVELY ORIENTING ROLLERS
DISPOSITIF DE CALCUL D'UNE ORIENTATION D'AU MOINS UN OBJET ET PROCÉDÉ DESTINÉ À ORIENTER RELATIVEMENT DES ROULEAUX

(30) Priorität: 14.05.2018 DE 102018207424; 06.11.2018 DE 102018218910
(43) Veröffentlichungstag der Anmeldung: 24.03.2021
(73) Patentinhaber: SMS Group GmbH, 40237 Düsseldorf (DE)
(72) Erfinder: FRIEDRICH, Martin, 40885 Ratingen (DE); MÖNSTERS, Frank, 48703 Stadtlohn (DE); HÖHNE, Tobias, 48653 Coesfeld (DE); NORMAN GIESEN, Norman, 47839 Krefeld (DE)
(74) Vertreter: Kross, Ulrich
(86) Internationale Anmeldenummer: PCT/EP2019/060175
(87) Internationale Veröffentlichungsnummer: WO 2019/219331

(56) Entgegenhaltungen:
- AT-A4- 509 606
- US-A1- 2014 068 958
- US-A1- 2015 308 818

## Beschreibung

Die Erfindung betrifft eine Vorrichtung zum Ermitteln einer Ausrichtung von wenigstens einem Objekt, aufweisend wenigstens einen elektromagnetische Strahlung reflektierenden Messkörper, der zum Ermitteln der Ausrichtung in körperlichen Kontakt mit einer Oberfläche des Objekts bringbar ist. Des Weiteren betrifft die Erfindung ein System zum Ermitteln einer Ausrichtung von wenigstens einem Objekt, aufweisend wenigstens einen Lasertracker und wenigstens eine Messsignale des Lasertrackers auswertende Auswertungseinrichtung. Zudem betrifft die Erfindung ein Verfahren zum relativen Ausrichten von Rollen eines Segments einer Rollenführung und das Ausrichten von Kokillenplatten einer Kokille.

Insbesondere bei Stranggießanlagen ist es erforderlich, Rollen eines Rollensegments einer Strangführung zum Führen eines gegossenen Metallstrangs sowie die Rollensegmente relativ zueinander möglichst präzise auszurichten. Um diese Relativausrichtung vorzunehmen, ist es bekannt, die Lage der einzelnen Rollen bzw. Rollensegmente unter Verwendung eines Laserscanners oder durch eine Lotmessung zu ermitteln, bei der ein Draht gespannt wird und gegen den gespannten Draht gemessen wird. Alternativ ist es bekannt, die Lage der einzelnen Rollen bzw. Rollensegmente unter Verwendung anderer mechanischer Hilfsmittel zu ermitteln, wie beispielsweise unter Verwendung von Linealen, besonderen Messflächen an oder in den zu messenden Objekten, Theodoliten, Nivelliergeräten bzw. Schnurgerüsten. Dabei wird meist auf Referenzmarken Bezug genommen, die relativ zur idealen Anlagen-Maßbezugslinie, d. h. in der Regel auf die Passlinie der Hinterkante des Metallstrangs, nicht ortsfest sind (thermische Dehnungen, Fundamentsetzungen).

Jede Einzelmessung liefert jeweils nur zwei von drei Raumkoordinaten eines Messpunkts. Die vollständige Bestimmung eines Messpunkts im Raum erfolgt durch Kreuzkorrelation, die meist von Hand mit Taschenrechner vorgenommen wird. Zur Kontrolle nach einer optischen Vermessung werden oft die Übergänge zwischen Kokille und Segment sowie Segment zu Segment mittels Schablonen nachvermessen. Dabei zeigen sich häufig Diskrepanzen zwischen den erwarteten Ergebnissen aus dem Rollenplan, d. h. den theoretischen Sollpositionen, den Messergebnissen und den Ergebnissen aus der Kontrolle.

Um einen optimalen Abgleich der einzelnen Positionen der Kokille und der Rollensegmente zu erreichen, ist ein sehr hoher Aufwand erforderlich. Typischerweise dauert die Ausrichtung aller Rollensegmente einer Stranggießanlage ca. zwei Wochen. Außerdem können fehlerhafte Ausrichtungen nicht immer gänzlich vermieden werden, was in der Folge Qualitätsprobleme und Produktionseinschränkungen verursacht. Entsprechend hoch sind die Folgekosten einer unzureichenden Ausrichtung der einzelnen Rollensegmente der Stranggießanlage.

Zum Eliminieren erkannter Fehlpositionen der Kokille oder der Rollensegmente, insbesondere von erkannten Übergangsfehlern, durch sogenanntes Nachrichten, müssen die Kokille und/oder Segmente mittels eines Krans oder eines Manipulators weggeschafft und an anderer Stelle abgesetzt werden. Dann werden zur Positionierung dienende Elemente demontiert und/oder gewechselt sowie wieder eingebaut und befestigt. Daraufhin kann die Kokille oder das Rollensegment wieder eingebaut werden. Da häufig nur ein einziger Kran oder ein einziger Manipulator zur Verfügung steht, müssen alle Rollensegmente nacheinander ausgerichtet werden.

Der Aufbau oben genannter mechanischer Messmittel ist schwierig und zeitaufwändig. Teilweise sind hierzu Bauteile zu demontieren, wie beispielsweise eine Kokille, die man dann im Zusammenhang mit den Segmentrollen auch nicht mehr messen kann. Oft werden Hallenkrane/Produktionskrane zum Rüsten verwendet und stehen in dieser Zeit den möglichen Nachbareinrichtungen zur Produktion nicht zur Verfügung. Dies geht mit einer hohen Rüstzeit und einem hohen Produktionsausfall einher.

Zudem benötigen manuelle Messungen der einzelnen Rollen unter Verwendung von Mikrometerschrauben oder Fühlerlehren viel Zeit. Darüber hinaus sind diese Messungen schlecht reproduzierbar und hängen stark vom Bediener ab. Des Weiteren weisen solche Messungen eine geringe Genauigkeit auf, die von der Bauart des Lineals abhängt, und erreichen nur selten die Genauigkeit von Lasertrackern. Zusätzlich müssen die mechanischen Messmittel jährlich überprüft werden. Der Zustand der Messmittel zwischen diesen Prüfintervallen ist unklar, insbesondere da keine Selbstüberprüfung durch das Messmittel selber erfolgt. Ferner erfolgen Auswertungen der Messergebnisse personengebunden meist mit Hilfsmitteln (Software) Dritter sowie durch händische Dokumentation/Protokollierung.

WO 2007 / 017 030 A1 betrifft ein Verfahren zum präzisen Positionieren einer Anzahl zusammenwirkender Walz- oder Rollenelemente einer Walz- oder Gießvorrichtung relativ zueinander. Mittels eines Messgeräts wird der Abstand zwischen mindestens drei direkt oder indirekt an jedem der Walz- oder Rollenelemente angeordneten Referenzpunkten und dem Messgerät gemessen. In Abhängigkeit des Messergebnisses werden Verstellelemente an jedem Walz- oder Rollenelement so betätigt, dass die Abstände zwischen den Referenzpunkten und dem Messgerät bestmöglich mit vorgegebenen Werten übereinstimmen. Die Messpunkte eines jeden Walz- oder Rollenelements sind direkt oder indirekt an einem Trägerelement des Walz- oder Rollenelements angeordnet.

WO 2013 / 186 007 A1 betrifft ein Verfahren zur Messung des Abstandes einer Messposition von einer Referenzposition, wobei die Abstandsmessung mit dem Messstrahl eines Lasertrackers durchgeführt wird, die Messposition vor der eigentlichen Abstandsmessung durch den Messstrahl markiert wird und die Abstandsmessung drahtlos gesteuert wird.

EP 2 574 412 A1 betrifft einen Messtaster zur Abtastung einer Mantelfläche einer zylindrischen Rolle. Der Messtaster weist zumindest einen Taster mit einer Tastfläche, ein vertikales Führungsprofil, das starr mit dem Taster verbunden ist, eine Laserempfangseinheit mit einem Detektorfeld, eine Abstandsauswerteeinheit und eine Wegmesseinrichtung zur Bestimmung eines vertikalen Abstands zwischen dem Taster und der Laserempfangseinheit auf. Die Laserempfangseinheit ist in vertikaler Richtung auf dem Führungsprofil verschiebbar. Das Detektorfeld ist zur Detektion eines Laserstrahls ausgebildet. Die Abstandsauswerteeinheit kann einen weiteren vertikalen Abstand des Laserstrahls gegenüber der Laserempfangseinheit ermitteln.

DE 10 2015 224 893 A1 betrifft ein Verfahren zum Vermessen der Kontur eines Körpers, bei dem ein Lasertracker-System mit einer Messkugel, einem Messkopf und einer Auswerteeinrichtung eingesetzt wird. Der Körper wird um zumindest eine Rotationsachse in Rotation versetzt, wobei die Messkugel einer Umfangsfläche des Körpers nachfolgt. Ein Laserstrahl von der Messkugel wird zurück zu dem Messkopf reflektiert. Auf Grundlage dieser Reflexion wird mittels der Auswerteeinrichtung die Kontur des Körpers bestimmt.

Die Veröffentlichung "3-D-Koordinatenmesstechnik für die Kokillen- und Segmentwerkstatt" Zeitschrift "Stahl und Eisen", Ausgabe 2/2011, S. 39-45 offenbart die Verwendung eines Lasertrackers zur Vermessung der Ausrichtung von Rollen von Rollensegmenten.

AT 509 606 A1 offenbart einen Messtaster zur Vermessung des Durchmessers einer zylindrischen Rolle. Der Messtaster weist zwei Tastflächen und einen schwenkbarer mit Reflektoren versehenen Messbügel auf, die in Kontakt mit einer Oberfläche der Rolle bringbar sind. Durch Erfassung der Bewegung des Messbügels wird das Durchmesser der zylindrischen Rolle ermittelt.

Eine Aufgabe der Erfindung ist es, ein Ermitteln einer Ausrichtung von wenigstens einem Objekt und ein gegebenenfalls darauf aufbauendes relatives Ausrichten von Kokillenplatten und Kokillenrollen sowie Rollen eines Segments einer Strangführung zu verbessern.

Diese Aufgabe wird durch die unabhängigen Patentansprüche gelöst. Vorteilhafte Ausgestaltungen sind in der nachfolgenden Beschreibung, den abhängigen Patentansprüchen und den Figuren wiedergegeben, wobei diese Ausgestaltungen jeweils für sich genommen oder in Kombination von wenigstens zwei dieser Ausgestaltungen miteinander einen weiterbildenden, insbesondere auch bevorzugten oder vorteilhaften, Aspekt der Erfindung darstellen können. Ausgestaltungen der Vorrichtung können dabei Ausgestaltungen des Systems und des Verfahrens entsprechen, und umgekehrt, selbst wenn im Folgenden hierauf im Einzelfall nicht explizit hingewiesen wird.

Eine erfindungsgemäße Vorrichtung zum Ermitteln einer Ausrichtung von wenigstens einem Objekt weist wenigstens einen elektromagnetische Strahlung reflektierenden Messkörper, der zum Ermitteln der Ausrichtung in körperlichen Kontakt mit einer Oberfläche des Objekts bringbar ist, wenigstens einen während der Ermittlung der Ausrichtung entlang des Objekts bewegbaren Messschlitten, der eine in körperlichen Kontakt mit dem Objekt bringbare Gleitoberfläche aufweist, wenigstens eine den Messkörper haltende Halteeinheit, die zwischen einer Maximalstellung, in der der Messkörper zumindest teilweise objektseitig über die Gleitoberfläche hinausragt, und einer Minimalstellung, in der der Messkörper nicht objektseitig über die Gleitoberfläche hinausragt, schwenkbar mit dem Messschlitten verbunden ist, und wenigstens eine die Halteeinheit in Richtung der Maximalstellung mit einer Kraft beaufschlagende Rückstelleinrichtung auf.

Erfindungsgemäß wird der Messkörper mittels des Messschlittens auf einfache Weise gehalten und geführt, so dass der Messkörper nicht von Hand geführt werden muss. Hierdurch werden die Messgenauigkeit und die Reproduzierbarkeit von Messergebnissen personenunabhängig und dadurch verbessert. Dabei kann mit der erfindungsgemäßen Vorrichtung beispielsweise ein taktiles Messen von mehreren zusammenliegenden Rollen eines Rollensegments hinsichtlich der geometrischen Ausrichtung der Rollen relativ zueinander durchgeführt werden, ohne die Rollen vollumfänglich abtasten zu müssen. Mit der Erfindung werden beispielsweise Ausrichtungsprozesse, wie beispielsweise das Messen der Ausrichtung von Rollen relativ zueinander im eingebauten Zustand in eine Strangführung einer Stranggießanlage, ermöglicht und im Gegensatz zu bisherigen konventionellen Verfahren vereinfacht und verbessert. Dadurch kann eine optimale bzw. korrekte Ausrichtung einer Stranggießanlage im zusammengebauten Zustand realisiert werden.

Die erfindungsgemäße Vorrichtung kann aufgrund ihrer Einfachheit und intuitive Handhabbarkeit auch von nicht spezialisierten Personen bedient werden. Hierdurch wird der Bedienereinfluss auf die Messung minimiert. Zudem sind mit der erfindungsgemäßen Vorrichtung beispielsweise Messungen auf Rollgängen, Walzgerüsten oder ähnlichem einfach realisierbar, insbesondere Messungen von Flächen aller Art.

Mit der Erfindung wird somit die Rüstzeit zur Durchführung der Messung minimiert, was mit einer Produktionssteigerung einhergeht. Zudem ist die Verwendung der erfindungsgemäßen Vorrichtung ohne Beeinträchtigung der Produktion von Nachbaranlagen möglich, da kein Hallen-/Produktionskran benötigt wird. Zudem besteht die Möglichkeit, eine Kokille im Zusammenhang mit den Rollensegmenten und gegebenenfalls einem Treiber zu messen. Die Erfindung bietet zudem die Möglichkeit zur Steigerung der Arbeitssicherheit, je nach bisherig zum Einsatz kommenden Systemen. Zudem können Justagemaßnahmen erfolgen, ohne dass die Vorrichtung zurückgebaut werden muss. Somit sind schnelle Wiederholungmessungen nach erfolgten Justagemaßnahmen möglich.

Der Messkörper kann auch als Lasertracker-Reflektor bezeichnet werden. Der Messkörper weist wenigstens eine sphärische Reflexionsoberfläche auf. Der Messkörper kann beispielsweise als Messkugel ausgebildet sein. Der Messkörper dient zum Reflektieren eines Laserstrahls eines Lasertrackers. Während der Messung wird der Messschlitten, in körperlichem Kontakt mit dem Objekt stehend, entlang des Objekts geführt, so dass der Messkörper mittels der Rückstelleinrichtung gegen die Oberfläche des Objekts gedrängt wird und hierbei der Kontur bzw. der Formgebung dieser Oberfläche sicher folgen kann. Die Vorrichtung kann auch zwei oder mehrere Messkörper aufweisen, wodurch beim Einsatz von mehreren Lasertrackern mehrere Messspuren gleichzeitig realisierbar sind.

Der Messschlitten gleitet während der Ermittlung der Ausrichtung des Objekts bzw. der Vermessung der Oberfläche des Objekts mittels seiner Gleitoberfläche über die Oberfläche des Objekts. Der Messschlitten ist vorzugsweise derart ausgebildet, dass er nicht um die Gleitrichtung kippen kann. Der Messschlitten ist vorzugsweise leichtgewichtig ausgebildet, beispielsweise teilweise oder vollständig aus einem Leichtmetall hergestellt. Der Messschlitten kann unter Verwendung von möglichst vielen Normteilen und/oder Gleichteilen hergestellt werden. Zudem kann die Mechanik zwischen dem Messschlitten und der Halteeinheit möglichst einfach ausgebildet sein, um die Funktionstüchtigkeit der Vorrichtung sicherzustellen. Zur Sicherung von Schrauben und Bauteilen, die nicht zur Verschwenkung des Messkörpers dienen bzw. die nicht verstellt werden, kann ein Schraubenkleber verwendet werden.

Damit der Messschlitten beim Gleiten über mehrere in Reihe hintereinander geschaltete Rollen nicht kippt, muss er ausreichend lang sein. Die Länge der Gleitoberfläche des Messschlittens ist so gewählt, dass dieser mindestens auf 3 Rollen aufliegt, um bei dem Übergang zwischen Rollen nicht zu kippen. Dennoch sollte der Messschlitten nicht zu lang sein, um die Transportabilität des Messschlittens zu erhalten. Die Höhe des Messschlittens kann beispielsweise etwa 65 mm betragen, insbesondere um auch CSP^{®}-Anlagen ohne Ausbau der Kokille mit der erfindungsgemäßen Vorrichtung vermessen zu können. Der Messschlitten kann beispielsweise eine Breite von 680 mm überdecken, so dass der Messschlitten in den meisten Stranggießanlagen mehr als eine Rolle überdeckt trotz Lagerlücken von geteilten Rollen.

Die Halteeinheit kann ausgebildet sein, den Messkörper auswechselbar zu halten, um bei Bedarf die Vorrichtung durch Austausch des Messkörpers an den jeweiligen Anwendungsfall anpassen und/oder reparieren zu können. Bei in ihrer Maximalstellung befindlicher Halteeinheit kann der Messkörper teilweise oder vollständig objektseitig über die Gleitoberfläche des Messschlittens hinausragen. Bei in ihrer Minimalstellung befindlichen Halteeinheit kann der Messkörper vollständig objektabseitig zu der Gleitoberfläche verlagert sein oder seine am nächsten zu dem Objekt angeordnete Seite kann in einer durch die Gleitoberfläche definierten Ebene liegen. Die Maximalstellung der Halteeinheit kann, insbesondere stufenlos, einstellbar sein, um die Vorrichtung ohne Einschränkungen bzw. ohne Kompromisse an die jeweilige Stranggießanlage anpassen zu können.

Die Rückstelleinrichtung sorgt dafür, dass der Messkörper während der Messung nicht den Kontakt zu dem Objekt verliert. Die Rückstelleinrichtung kann wenigstens ein Federelement aufweisen oder die Rückstellkraft auf Basis eines nicht mechanischen Prinzips erzeugen.

Das Objekt kann beispielsweise eine Rolle eines Rollensegments einer Strangführung einer Stranggießanlage oder eine eines Rollgangs eines Walzwerks oder eine Rolle einer anderweitige Einrichtung zum Behandeln eines Metallstrangs sein. Alternativ kann das Objekt ein Bauteil (Kupferplatte) einer Kokille bzw. die Kokille selbst sein. Die erfindungsgemäße Vorrichtung kann zur Durchführung der Messung in einer Ausrichtwerkstatt, Prüfwerkstatt, Reparaturwerkstatt oder in einem anderweitigen Messraum eingesetzt werden.

Gemäß einer vorteilhaften Ausgestaltung weist der Messschlitten wenigstens zwei parallel zueinander und beabstandet voneinander angeordnete, die Gleitoberfläche definierende Kufen und wenigstens eine die Kufen starr miteinander verbindende, quer zu den Kufen ausgerichtete Traverse auf, wobei die Halteeinheit um eine quer zu den Kufen und parallel zu der Traverse ausgerichtete Schwenkachse schwenkbar mit dem Messschlitten verbunden ist. Der Messschlitten kann auch drei parallel zueinander und beabstandet voneinander angeordnete, die Gleitoberfläche definierende Kufen aufweisen. Hierdurch kann zuverlässig verhindert werden, dass der Messschlitten kippt bzw. verkantet, wenn er über eine Lagerstelle gleitet. Um sicherzustellen, dass sich maximal nur eine einzige Kufe in einer Lagerstelle befindet, kann der Messschlitten beispielsweise eine Breite von 680 mm aufweisen, so dass der Messschlitten in seiner Breitenrichtung in den meisten Stranggießanlagen mehr als eine Rolle überdeckt.

Gemäß einer weiteren vorteilhaften Ausgestaltung ist an dem Messschlitten wenigstens ein Magnet angeordnet. Dies ist von Vorteil bei einem ferromagnetischen Objekt, da der Messschlitten über das Magnet an das Objekt herangezogen wird, um sicher an diesem führbar zu sein und sich nicht von dem Objekt ungewollt zu lösen. Der Magnet kann beispielsweise als Magnetschiene ausgebildet sein. Hierdurch wird eine flächige Magnetkraft erreicht, die vor allem für runde Haftkörper, wie beispielsweise eine Rolle, wichtig ist. An dem Messschlitten können auch zwei oder mehrere Magnete angeordnet sein. Insbesondere können die Magnete an den äußeren Kufen des Messschlittens angeordnet sein. Die Magnete können rechteckig ausgebildet sein und in Holmen der Kufen oder in die Kufen tragende Holme nur von einem unteren bis zu einem mittleren Bereich eingeklebt sein. Reicht die Magnetkraft nicht aus, um den Messschlitten an die Rollen zu pressen, können weitere Magnete eingeklebt bzw. nachgelegt werden. Lässt man den Messschlitten zur Messung beispielsweise vertikal an den Rollen hinunter, haftet er ab Beginn der Messung an den Rollen an. Trifft der Messkörper auf eine Rolle, hat er von Anfang bis Ende Kontakt zu der Rolle.

Gemäß einer weiteren vorteilhaften Ausgestaltung weist die Vorrichtung wenigstens eine mit dem Messschlitten verbundene Bewegungseinrichtung auf, mit der der Messschlitten während der Ermittlung der Ausrichtung vertikal entlang des Objekts bewegbar ist. Die Bewegungseinrichtung kann ein flexibles Element, beispielsweise ein Seil oder eine Kette, aufweisen, an dem der Messschlitten aufgehängt ist. Zudem kann die Bewegungseinrichtung eine manuell oder automatisiert betätigbare Seilwinde und/oder eine Seilführung bzw. eine Kettenführung aufweisen. Die Messung kann bei einer vertikalen Aufwärtsbewegung und/oder bei einer vertikalen Abwärtsbewegung des Messschlittens erfolgen.

Ein erfindungsgemäßes System zum Ermitteln einer Ausrichtung von wenigstens einem Objekt weist wenigstens einen Lasertracker, wenigstens eine Messsignale des Lasertrackers auswertende Auswertungseinrichtung und wenigstens eine Vorrichtung nach einer der oben genannten Ausgestaltungen oder einer Kombination von wenigstens zwei dieser Ausgestaltungen miteinander auf, wobei der Lasertracker eingerichtet ist, den Messkörpers während seiner Bewegung entlang einer Oberfläche des Objekts zu verfolgen.

Mit dem System sind die oben mit Bezug auf die Vorrichtung genannten Vorteile entsprechend verbunden. Das System ermöglicht eine automatisierte Auswertung der Messdaten des Lasertrackers mit minimalen Benutzereingriff. Zudem ist mit dem System eine automatisierte Dokumentation der Messdaten und/oder eine automatisierte Fehlererkennung, Fehlervermeidung und Fehlereliminierung möglich. Mit dem System ist ein digitaler Messprozess durchführbar, der schnelle, genaue und reproduzierbare Messergebnisse liefert.

Der Lasertracker verfolgt mit seinem Laserstrahl automatisch den Messkörper und nimmt kontinuierlich oder diskontinuierlich Messwerte in x-, y- und z-Richtung auf und übermittelt diese Werte an die (externe) Auswertungseinrichtung, die wenigstens eine Recheneinheit und/oder wenigstens eine Speichereinheit aufweisen kann. Die Messergebnisse werden von der Auswertungseinrichtung analysiert. Dabei kann die Kontur, die gemessen wurde, berechnet und grafisch dargestellt werden. Die graphische Darstellung der Kontur kann die Grundlage zur Ausrichtung der Bauteile bilden, wobei ein Bedienpersonal direkt ablesen kann, welche Stellmaßnahmen erforderlich sind.

Bei der Auswertung der Messsignale des Lasertrackers durch die Auswertungseinrichtung können verschiedene mathematische Verfahren zur Anwendung kommen, um beispielsweise zusätzlich den Berührungspunkt der Rolle zum Metallstrang berechnen zu können. Dadurch lässt sich die "Hinterkante Strang" bezogen auf ein Sollmaß berechnen. Im Fokus steht hierbei die Auswertung der aufgezeichneten Punktwolke. Anhand dieser lässt sich die Qualität der Scans ermitteln. Durch Anpassung diverser Parameter ist der Automatisierungsgrad beeinflussbar. Mittels dieser Parameter ist eine Festlegung von Akzeptanzkriterien und/oder Qualitätskriterien für die Messdurchführung möglich.

Ein erfindungsgemäßes Verfahren zum relativen Ausrichten von Rollen eines Segments einer Rollenführung, umfasst die Schritte:
- Ermitteln der relativen Ausrichtung der Rollen unter Verwendung eines oben genannten Systems; und
- Ausrichten der Rollen unter Berücksichtigung eines Ergebnisses der mit dem System durchgeführten Ermittlung.

Mit dem Verfahren sind die oben mit Bezug auf das System bzw. die Vorrichtung genannten Vorteile entsprechend verbunden.

Im Folgenden wird die Erfindung unter Bezugnahme auf die anliegenden Figuren anhand einer bevorzugten Ausführungsform beispielhaft erläutert, wobei die nachfolgend erläuterten Merkmale sowohl jeweils für sich genommen als auch in Kombination von wenigstens zwei dieser Merkmale miteinander einen vorteilhaften oder weiterbildenden Aspekt der Erfindung darstellen können. Es zeigen:
- Figur 1:: eine schematische Draufsicht eines Ausführungsbeispiels für ein erfindungsgemäßes System;
- Figur 2:: eine schematische Seitenansicht der in Figur 1 gezeigten Vorrichtung;
- Figur 3:: eine schematische Vorderansicht der in Figur 1 gezeigten Vorrichtung;
- Figur 4:: eine schematische und perspektivische Darstellung der in Figur 1 gezeigten Vorrichtung von schräg oben; und
- Figur 5:: eine schematische Darstellung eines Einsatzbeispiels für die in Figur 1 gezeigte Vorrichtung.

In den Figuren sind gleiche bzw. funktionsgleiche Bauteile mit denselben Bezugszeichen versehen. Eine wiederholte Beschreibung dieser Bauteile kann weggelassen sein.

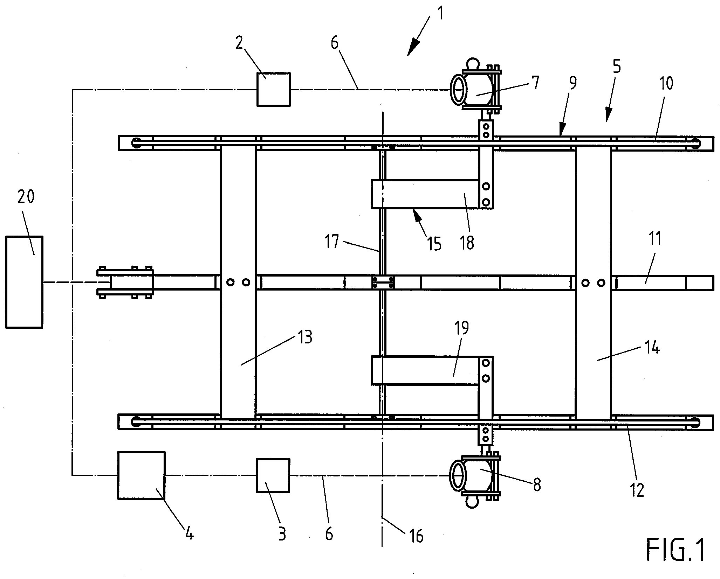

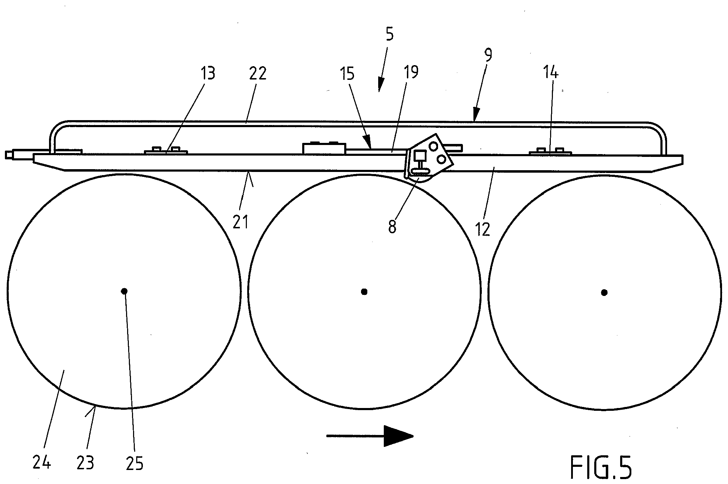

Figur 1 zeigt eine schematische Draufsicht eines Ausführungsbeispiels für ein erfindungsgemäßes System 1 zum Ermitteln einer Ausrichtung von wenigstens einem nicht gezeigten Objekt. Eine beispielhafte Anwendung des Systems 1 ist in Figur 5 gezeigt.

Das System 1 weist ein oder wahlweise auch zwei Lasertracker 2 und 3 und eine Messsignale der Lasertracker 2 und 3 auswertende Auswertungseinrichtung 4 auf. Des Weiteren weist das System 1 eine Vorrichtung 5 zum Ermitteln der Ausrichtung des Objekts auf. Die Lasertracker 2 und 3 senden jeweils ein Laserlicht 6 aus.

Die Vorrichtung 5 weist zwei elektromagnetische Strahlung reflektierenden Messkörper 7 und 8 auf, die jeweils als Messkugel ausgebildet sind und die zum Ermitteln der Ausrichtung in körperlichen Kontakt mit einer nicht gezeigten Oberfläche des Objekts bringbar sind.

Zudem weist die Vorrichtung 5 einen während der Ermittlung der Ausrichtung entlang des Objekts bewegbaren Messschlitten 9 auf, der eine in körperlichen Kontakt mit dem Objekt bringbare, in Figur 1 dem Betrachter abgewandte Gleitoberfläche aufweist. Der Messschlitten 9 weist drei parallel zueinander und beabstandet voneinander angeordnete, die Gleitoberfläche definierende Kufen 10, 11 und 12 und zwei die Kufen 10, 11 und 12 starr miteinander verbindende, quer zu den Kufen 10, 11 und 12 ausgerichtete Traversen 13 und 14 auf. An dem Messschlitten 9 sind mehrere nicht gezeigte Magnete angeordnet, insbesondere an den Kufen 10 und 12.

Die Vorrichtung 5 weist zudem eine die Messkörper 7 und 8 haltende Halteeinheit 15 auf, die zwischen einer in den Figuren 1 bis 5 gezeigten Maximalstellung, in der die Messkörper 7 und 8 zumindest teilweise objektseitig über die Gleitoberfläche hinausragen, und einer nicht gezeigten Minimalstellung, in der die Messkörper 7 und 8 nicht objektseitig über die Gleitoberfläche hinausragen, schwenkbar mit dem Messschlitten 9 verbunden ist. Dabei ist die Halteeinheit 15 um eine quer zu den Kufen 10, 11 und 12 und parallel zu den Traversen 13 und 14 ausgerichtete Schwenkachse 16 schwenkbar mit dem Messschlitten 9 verbunden. Die Halteeinheit weist eine quer zu den Kufen 10, 11 und 12 verlaufende Festachse 17 auf, an der zwei L-förmig ausgebildete Haltehebel 18 und 19 um die Schwenkachse 16 unabhängig voneinander schwenkbar gelagert sind. Die Haltehebel 18 und 19 halten jeweils einen Messkörper 7 bzw. 8.

Des Weiteren weist die Vorrichtung 5 wenigstens eine die Halteeinheit 15 in Richtung der Maximalstellung mit einer Kraft beaufschlagende, nicht gezeigte Rückstelleinrichtung auf.

Ferner weist die Vorrichtung eine mit dem Messschlitten 9 verbundene Bewegungseinrichtung 20 auf, mit der der Messschlitten 9 während der Ermittlung der Ausrichtung vertikal entlang des Objekts bewegbar ist.

Die Vorrichtung 5 weist zumindest größtenteils Kraftschlussverbindungen auf. Die Lasertracker 2 und 3 sind eingerichtet, den jeweiligen Messkörper 7 bzw. 8 während seiner Bewegung entlang der Oberfläche des Objekts zu verfolgen.

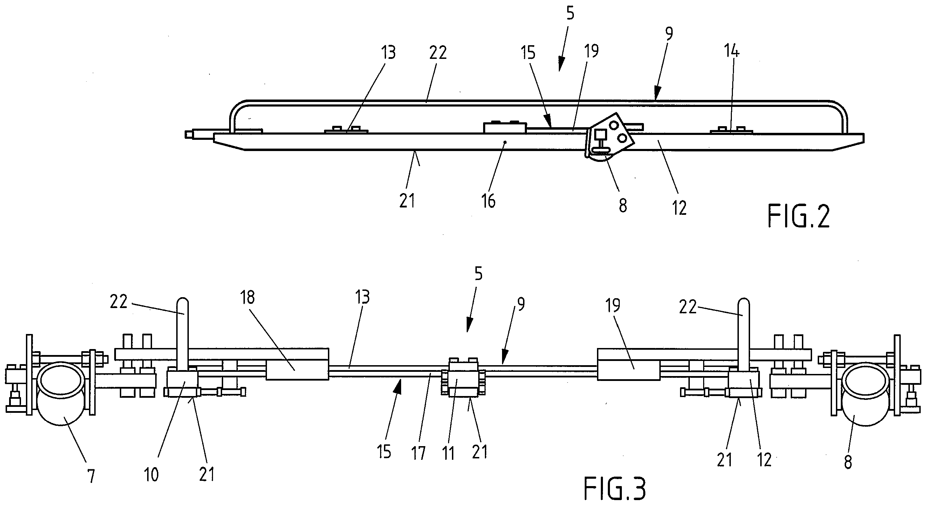

Figur 2 zeigt eine schematische Seitenansicht der in Figur 1 gezeigten Vorrichtung 5. Es ist zu sehen, dass die Messkörper, von denen in Figur 2 lediglich der Messkörper 8 gezeigt ist, bei in ihrer gezeigten Maximalstellung befindlichen Halteeinheit 15 teilweise objektseitig über die Gleitoberfläche 21 des Messschlittens 9 hinausragt. Zudem ist zu erkennen, dass an den äußeren Kufen, von denen in Figur 2 lediglich die Kufe 12 gezeigt ist, jeweils ein Bügel 22 zum Schutz des Messschlittens 9 angeordnet ist und zur Versteifung die Traversen 13, 14.

Figur 3 zeigt eine schematische Vorderansicht der in Figur 1 gezeigten Vorrichtung 5. Es ist die aus den drei Kufen 10, 11 und 12 gebildete Gleitoberfläche 21 gezeigt.

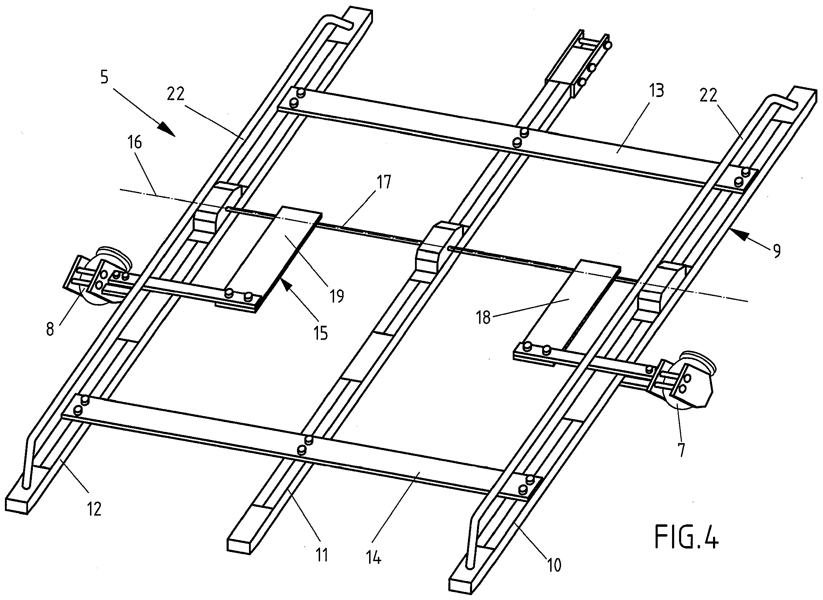

Figur 4 zeigt eine schematische und perspektivische Darstellung der in Figur 1 gezeigten Vorrichtung 5 von schräg oben.

Figur 5 zeigt eine schematische Darstellung eines Einsatzbeispiels für die in Figur 1 gezeigte Vorrichtung 5. Die Vorrichtung 5 wird zum Ermitteln der relativen Ausrichtung der Rollen 24 eigesetzt, wozu die Messkörper 7 und 8 in körperlichen Kontakt mit den Oberflächen 23 der Rollen 24 gebracht werden. Die Länge des Messschlittens 9 ist länger als der Abstand zwischen den Längsmittelachsen 25 der beiden durch die mittlere Rolle 24 voneinander getrennten äußeren Rollen 24.

### Bezugszeichenliste

- 1: System
- 2: Lasertracker
- 3: Lasertracker
- 4: Auswertungseinrichtung
- 5: Vorrichtung
- 6: Laserlicht
- 7: Messkörper
- 8: Messkörper
- 9: Messschlitten
- 10: Kufe
- 11: Kufe
- 12: Kufe
- 13: Traverse
- 14: Traverse
- 15: Halteeinheit
- 16: Schwenkachse
- 17: Festachse
- 18: Haltehebel
- 19: Haltehebel
- 20: Bewegungseinrichtung
- 21: Gleitoberfläche von 9
- 22: Bügel
- 23: Oberfläche
- 24: Rolle (Objekt)
- 25: Längsmittelachse von 24
- 26: Anlängepunkt

## Patentansprüche

1. Vorrichtung (5) zum Ermitteln einer Ausrichtung von wenigstens einem Objekt (24), aufweisend
- wenigstens einen elektromagnetische Strahlung reflektierenden Messkörper (7, 8), der zum Ermitteln der Ausrichtung in körperlichen Kontakt mit einer Oberfläche (23) des Objekts (24) bringbar ist, **gekennzeichnet durch**
- wenigstens einen während der Ermittlung der Ausrichtung entlang des Objekts (24) bewegbaren Messschlitten (9), der eine in körperlichen Kontakt mit dem Objekt (24) bringbare Gleitoberfläche (21) aufweist,
- wenigstens eine den Messkörper (7, 8) haltende Halteeinheit (15), die zwischen einer Maximalstellung, in der der Messkörper (7, 8) zumindest teilweise objektseitig über die Gleitoberfläche (21) hinausragt, und einer Minimalstellung, in der der Messkörper (7, 8) nicht objektseitig über die Gleitoberfläche (21) hinausragt, schwenkbar mit dem Messschlitten (9) verbunden ist, und
- wenigstens eine die Halteeinheit (15) in Richtung der Maximalstellung mit einer Kraft beaufschlagende Rückstelleinrichtung.

2. Vorrichtung (5) nach Anspruch 1, **dadurch gekennzeichnet, dass** der Messschlitten (9) wenigstens zwei parallel zueinander und beabstandet voneinander angeordnete, die Gleitoberfläche (21) definierende Kufen (10, 11, 12) und wenigstens eine die Kufen (10, 11, 12) starr miteinander verbindende, quer zu den Kufen (10, 11, 12) ausgerichtete Traverse (13, 14) aufweist, wobei die Halteeinheit (15) um eine quer zu den Kufen (10, 11, 12) und parallel zu der Traverse (13, 14) ausgerichtete Schwenkachse (16) schwenkbar mit dem Messschlitten (9) verbunden ist.

3. Vorrichtung (5) nach Anspruch 1 oder 2, **dadurch gekennzeichnet, dass** an dem Messschlitten (9) wenigstens ein Magnet angeordnet ist.

4. Vorrichtung (5) nach einem der Ansprüche 1 bis 3, **gekennzeichnet durch** wenigstens eine mit dem Messschlitten (9) verbundene Bewegungseinrichtung (20), mit der der Messschlitten (9) während der Ermittlung der Ausrichtung vertikal entlang des Objekts (24) bewegbar ist.

5. Vorrichtung (5) nach einem der Ansprüche 1 bis 4, **dadurch gekennzeichnet, dass** die Vorrichtung (5) zumindest größtenteils Kraftschlussverbindungen aufweist.

6. System (1) zum Ermitteln einer Ausrichtung von wenigstens einem Objekt (24), aufweisend wenigstens einen Lasertracker (2, 3) und wenigstens eine Messsignale des Lasertrackers (2, 3) auswertende Auswertungseinrichtung (4), **gekennzeichnet durch** wenigstens eine Vorrichtung (5) nach einem der Ansprüche 1 bis 5, wobei der Lasertracker (2, 3) eingerichtet ist, den Messkörpers (7, 8) während seiner Bewegung entlang einer Oberfläche (23) des Objekts (24) zu verfolgen.

7. Verfahren zum relativen Ausrichten von Rollen (24) eines Segments einer Rollenführung, aufweisend die Schritte:
- Ermitteln der relativen Ausrichtung der Rollen (24) unter Verwendung eines Systems (1) nach Anspruch 6; und
- Ausrichten der Rollen (24) unter Berücksichtigung eines Ergebnisses der mit dem System (1) durchgeführten Ermittlung.

## Claims

1. Device (5) for determining an orientation of at least one object (24), comprising
- at least one measuring body (7, 8) which reflects electromagnetic radiation and which for determination of the orientation can be brought into physical contact with a surface (23) of the object (24),
**characterised by**
- at least one measuring carriage (9) which is movable along the object (24) during determination of the orientation and which has a slide surface (21) able to be brought into physical contact with the object (24),
at least one holding unit (15), which holds the measuring body (7, 8) and is connected with the measuring carriage (9) to be pivotable between a maximum setting in which the measuring body (7, 8) projects at the object side at least partly beyond the slide surface (21) and a minimum setting in which the measuring body (7, 8) does not project at the object side beyond the slide surface (21), and
- at least one restoring device acting by a force on the holding unit (15) in the direction of the maximum setting.

2. Device (5) according to claim 1, **characterised in that** the measuring carriage (9) comprises at least two mutually parallel and spaced-apart runners (10, 11, 12) defining the slide surface (21) and at least one cross member (13, 14) rigidly connecting the runners (10, 11, 12) together and oriented transversely to the runners (10, 11, 12), wherein the holding unit (15) is connected with the measuring carriage (9) to be pivotable about a pivot axis (16) oriented transversely to the runners (10, 11, 12) and parallel to the cross member (13, 14).

3. Device (5) according to claim 1 or 2, **characterised in that** at least one magnet is arranged at the measuring carriage (9).

4. Device (5) according to any one of claims 1 to 3, **characterised by** at least one movement device (20) which is connected with the measuring carriage (9) and by which the measuring carriage (9) is movable vertically along the object (24) during determination of the orientation.

5. Device (5) according to any one of claims 1 to 4, **characterised in that** the device (5) for at least the major part comprises friction connections.

6. System (1) for determining an orientation of at least one object (24), comprising at least one laser tracker (2, 3) and at least one evaluating device (4) evaluating measurement signals of the laser tracker (2, 3), **characterised by** at least one device (5) according to any one of claims 1 to 5, wherein the laser tracker (2, 3) is arranged to track the measuring body (7, 8) during movement thereof along a surface (23) of the object (24).

7. Method for relative orientation of rollers (24) of a segment of a roller guide, comprising the steps of:
- determining the relative orientation of the rollers (24) with use of a system (1) according to claim 6; and
- orienting the rollers (24) with consideration of a result of the determination performed by the system (1).

## Revendications

1. Dispositif (5) destiné à la détermination d'une orientation d'au moins un objet (24), qui présente :
- au moins un corps de mesure (7, 8) qui réfléchit un rayonnement électromagnétique, qui peut être amené en contact corporel avec une surface (23) de l'objet (24) dans le but de déterminer l'orientation ;
**caractérisé par**
- au moins un chariot de mesure (9) apte à se déplacer le long de l'objet (24) au cours de la détermination de l'orientation, qui présente une surface de glissement (21) qui peut être amenée en contact corporel avec l'objet (24) ;
- au moins une unité de maintien (15) qui maintient le corps de mesure (7, 8), qui, entre une position maximale, dans laquelle le corps de mesure (7, 8) fait saillie au moins de manière partielle, du côté de l'objet, au-delà de la surface de glissement (21) et une position minimale dans laquelle le corps de mesure (7, 8) ne fait pas saillie, du côté de l'objet, au-delà de la surface de glissement (21), est reliée en pivotement au chariot de mesure (9) ; et
- au moins un mécanisme de remise en position initiale qui sollicite avec une force l'unité de maintien (15) dans la direction de la position maximale.

2. Dispositif (5) selon la revendication 1, **caractérisé en ce que** le chariot de mesure (9) présente au moins deux patins (10, 11, 12) qui définissent la surface de glissement (21), qui sont disposés en parallèle l'un par rapport à l'autre et à l'écart l'un de l'autre et au moins une traverse (13, 14), orientée dans la direction transversale par rapport aux patins (10, 11, 12), qui relie les patins (10, 11, 12) l'un à l'autre de manière rigide; dans lequel l'unité de maintien (15) est reliée au chariot de mesure (9) de manière à pouvoir pivoter autour d'un axe de pivotement orienté dans la direction transversale par rapport aux patins (10, 11, 12) et parallèlement à la traverse (13, 14).

3. Dispositif (5) selon la revendication 1 ou 2, **caractérisé en ce qu'**au moins un aimant est disposé contre le chariot de mesure (9).

4. Dispositif (5) selon l'une quelconque des revendications 1 à 3, **caractérisé par** au moins un mécanisme de mise en mouvement (20) qui est relié au chariot de mesure (9), avec lequel le chariot de mesure (9) peut être déplacé au cours la détermination de l'orientation, dans la direction verticale, le long de l'objet (24).

5. Dispositif (5) selon l'une quelconque des revendications 1 à 4, **caractérisé en ce que** le dispositif (5) présente des liaisons par friction au moins dans une large mesure.

6. Système (1) destiné à la détermination d'une orientation d'au moins un objet (24), qui présente au moins un suiveur de laser (2, 3) et au moins un mécanisme d'évaluation (4) qui évalue des signaux de mesure du suiveur de laser (2, 3), **caractérisé par** au moins un dispositif (5) en conformité avec l'une quelconque des revendications 1 à 5, dans lequel le suiveur de laser (2, 3) est conçu pour suivre le corps de mesure (7, 8) au cours du déplacement de ce dernier le long d'une surface (23) de l'objet (24).

7. Procédé destiné à l'orientation relative de galets (24) d'un segment d'un guidage par galets, qui présente les étapes dans lesquelles :
- on détermine l'orientation relative des galets (24) par l'intermédiaire de l'utilisation d'un système (1) en conformité avec la revendication 6 ; et
- on oriente les galets (24) en prenant en compte un résultat de la détermination qui a été mise en oeuvre avec le système (1).
